# EUROPÄISCHE PATENTSCHRIFT

(11) **EP 0 994 770 B1**
(45) Veröffentlichungstag und Bekanntmachung des Hinweises auf die Patenterteilung: **02.02.2005**
(21) Anmeldenummer: 98940210.2
(22) Anmeldetag: 10.07.1998
(51) Int. Cl.: B29C 65/16, B23K 26/00, B23K 26/08, B29C 57/10, B65D 35/04, B65D 35/08, B29D 23/20, B29B 13/02

(54) **VERFAHREN UND VORRICHTUNG ZUM VERSCHWEISSEN DER ENDEN VON ROHRARTIGEN BEHÄLTERN, INSBESONDERE VON TUBEN**
METHOD AND DEVICE FOR SOLDERING THE ENDS OF TUBULAR CONTAINERS, SPECIALLY TUBES
PROCEDE ET DISPOSITIF POUR SOUDER LES EXTREMITES DE RECIPIENTS TUBULAIRES, EN PARTICULIER DE TUBES

(30) Priorität: 11.07.1997 DE 29712264 U
(43) Veröffentlichungstag der Anmeldung: 26.04.2000
(73) Patentinhaber: IWK Verpackungstechnik GmbH, 76297 Stutensee (DE)
(72) Erfinder: Sator, Alexander P., 22041 Hamburg (DE)
(74) Vertreter: Lasch, Hartmut Dipl.-Ing.
(86) Internationale Anmeldenummer: PCT/EP1998/004317
(87) Internationale Veröffentlichungsnummer: WO 1999/002330

(56) Entgegenhaltungen:
- EP-A- 0 061 352
- EP-A- 0 087 403
- EP-A- 0 839 634
- DE-A- 2 261 388
- DE-A- 3 744 402
- US-A- 4 550 238
- PATENT ABSTRACTS OF JAPAN vol. 009, no. 194 (M-403), 10. August 1985 & JP 60 060497 A (HITACHI SEISAKUSHO KK), 8. April 1985
- POTENTE H ET AL: "LASERSTUMPFSCHWEISSEN" KUNSTSTOFFE, Bd. 87, Nr. 5, Mai 1997, Seite 590/591, 594 XP000656827

## Beschreibung

Die Erfindung bezieht sich auf ein Verfahren und eine Vorrichtung zum Verschweißen der Enden von rohrförmigen Behältern, insbesondere von Tuben, nach dem Oberbegriff des Patentanspruchs 1.

Zahlreiche fließfähige oder pastöse Medien werden in Tuben verpackt, z.B. Kosmetika, Zahnpasta, Schuhcreme, Salben und dergleichen. Die Tuben können aus geeignetem metallischem Flachmaterial geformt sein, das plastisch verformbar ist. Seit längerer Zeit, wird - hauptsächlich aus ökonomischen Gründen - Kunststoffmaterial verwendet.

Vor dem Abdichten des Endes des Vorformlings eines tubenartigen Behälters wird dieser zunächst mit dem aufzunehmenden Material gefiillt. Die Entnahmeseite ist durch eine geeignete Kappe, einen Schraubverschluß oder dergleichen abgeschlossen. Nach dem Befüllen erfolgt das Verschließen des Einfüllendes. Bei plastisch verformbarem Flachmaterial ist bekannt, das Einfüllende entlang einer Linie zu falten. Gegebenenfalls findet eine linienartige Verpressung im Endbereich statt. Damit ist eine ausreichende Dichtigkeit gewährleistet. Bei Kunststoffmaterial ist ein derartiges Verfahren nicht anwendbar. Vielmehr ist es erforderlich, daß das aufeinandergelegte Ende verschweißt oder versiegelt wird.

Ein aus der DE 37 44 402 C2 bekanntes Verfahren zum Verschließen von tubenartigen Behältern aus Kunststoffmaterial sieht vor, den Endabschnitt zunächst in geeigneter Weise durch Einwirkung von Wärme oder dergleichen zu erweichen oder anzuschmelzen, bevor mit Hilfe einer Preßvorrichtung eine dichtende Naht hergestellt wird.

Das Erweichen wird dadurch herbeigeführt, daß ein Ring um das Einfüllende herum angeordnet wird, der mit einer Reihe von Düsenöffnungen versehen ist, über die heiße Luft auf die Außenwandung des Einfüllendes der Tube geblasen wird. Da im Regelfall eine komplette Verschweißung erforderlich ist, muß erhebliche Wärme von außen zugeführt werden, d.h. bis zu ca. 18 kW elektrische Leistung. Dieses Verfahren wird heutzutage vielfach in der Verpackungsindustrie eingesetzt und ist unter der Bezeichnung "Hot-Air" Verfahren bekannt.

Es ist ferner bekannt, apparativ analog zum Heißluftverfahren mit Hilfe von Ultraschall oder Mikrowellenbestrahlung eine Erweichung bzw. Anschmelzung des zu verschweißenden Endes vorzunehmen.

Bei allen Methoden ist es erforderlich, die Anschmelzung und die nachfolgende Verpressung in nacheinander folgenden Produktionstakten durchzuführen, da die Vorrichtung zum Anschmelzen des Materials räumlich nicht in Einklang mit der Verpressungsvorrichtung gebracht werden kann. Zusätzlich ist es zumeist notwendig, die zuerst aufgeheizten Tuben nach dem Verpressen wieder abzukühlen da sonst eine ungewollte plastische Verformung entstehen und zusätzlich das Produkt durch die Wärmebeeinflussung beeinträchtigt werden kann. Aufgrund dieses zusätzlichen Kühlungsaufwandes ist dieses Verfahren außerordentlich unökonomisch.

Aus DE 22 61 388 ist ein Verfahren zum Anschweißen eines Endstücks aus Kunststoff an einem rohrförmigen Kunststoffkörper bekanntgeworden, bei dem das Endstück mit einem rohrartigen Abschnitt in den rohrartigen Körper eingesetzt wird. Mit Hilfe eines Lasers wird auf der Außenseite des rohrartigen Körpers eine Bestrahlung vorgenommen, wobei das Rohr mit dem Endstück rotiert. Eine Anpressrolle preßt den erwärmten Bereich zusammen und bewirkt eine Art Verschweißung.

Die JP 60060497 zeigt ein innerhalb eines Rohres angeordnetes Umlenkelement. Das Rohr wird nicht zusammengedrücht oder gefaltet.

Der Erfindung liegt die Aufgabe zugrunde, ein Verfahren und eine Vorrichtung zum Verschweißen der Enden von rohrartigen Behältern, insbesondere von Tuben, zu schaffen, die für alle gebräuchlichen Kunststoffarten für Tuben einzusetzen ist, die einen geringen Energieverbrauch aufweist, eine hohe Produktionsgeschwindigkeit gewährleistet und mit einfachen Mitteln erstellt werden kann.

Diese Aufgabe wird durch die Merkmale des Patentansprüche 1 und 8 gelöst.

Naturgemäß kann der Laserstrahl nur einen Lichtpunkt oder -fleck auf der Umfangswand erzeugen. Da es erforderlich ist, einen um den Umfang herum laufenden ringförmigen Flächenbereich zu erweichen, ist eine Relafivdrehung zwischen Laserstrahl und Behälter erforderlich sofern nur ein Laserlichtpunkt genutzt werden kann.

Bei der erfindungsgemäßen Vorrichtung weist die Heizvorrichtung einen Laser auf, dessen Strahl auf die innere Umfangswand gerichtet ist. Ferner ist eine Drehantriebsvorrichtung vorgesehen, die eine Relativdrehung des Laserstrahls gegenüber des rohrartigen Behälters erzeugt, indem das außerhalb des Behälters angeordnete optische Umlenkelement in Drehung um die eigene Achse, axial zur Einfallsachse des Laserstrahls in Drehung versetzt wird. Der Drehpunkt des Umlenkelements ist hierbei so angeordnet, daß der Spiegelpunkt des Umlenkspiegels genau auf der rotationssymmetrischen Achse des rohrförmigen Behälters liegt.

Dadurch, daß der Laserstrahl auf die Innenwand des rohrförmigen Behälters gerichtet ist, wird der Vorteil erzielt, daß derjenige Flächenbereich des rohrförmigen Behälters erwärmt wird, der zur Verschweißung unmittelbar herangezogen wird.

Als Umlenkelement wird vorzugweise ein Umlenkspiegel eingesetzt, der für die jeweilige verwendete Wellenlänge optimiert ist. Der Umlenkspiegel ist vorzugsweise so verstellbar, daß eine Veränderung des Auslenkwinkels erreichbar ist. Durch die Winkelverstellung kann eine Anpassung an unterschiedliche Durchmesser der Behälter auf die Weise vorgenommen werden, daß der Laserlichtpunkt in der Rotationsebene nach dem Umlenkspiegel in der Höhe gegenüber dem Umlenkspiegel variiert werden kann. Adaptiert auf unterschiedliche Radien der Behälter gegenüber dem zentralen Punkt des Umlenkspiegels kann durch eine relative Verstellung der Laserlichtpunkte auf einen höheren Punkt (als bei Behältern mit kleineren Radien) die größere Entfernung von der Behälterwandung kompensiert werden. Alternativ zur Winkelveränderung des Umlenkelementes kann auch die Verstellung des Umlenkelementes linear entlang der rotationssysmmetrischen Achse des rohrartigen des Behälters zur Verstellung der relativen Höhe des Laserlichtpunktes in Erwägung gezogen werden.

Es ist weiter zu bemerken, daß eine Drehung des bereits gefüllten, rohrförmigen Behälters aus verschiedenen Gründen ungünstig ist, da es bei den erforderlichen Geschwindigkeiten wahrscheinlich ist, daß das Produkt aufgrund zentrifugal wirkender Kräfte aus dem rohrartigen Behälter nach oben, zu dem offenen Ende hin herausgedrückt wird. Aus diesem Grund wird der Laserstrahl bzw. der Umlenkspiegel in Drehung versetzt. Vorzugsweise erfolgt eine Rotation des mittleren Reflexionspunktes auf der Oberfläche des Umlenkspiegels in der Längsachse des rohrartigen Behälters.

Mit einer geeigneten Anordnung von Laserumlenkspiegel und Behälter, derart daß der Umlenkspiegel außerhalb des rohrförmigen Behälters angeordnet ist, ist bei der Produktion lediglich erforderlich, den rohrförmigen Behälter unterhalb des Umlenkspiegels zu positionieren, bevor der Erwärmungs- und Schweißvorgang eingeleitet wird.

Ein zusätzlicher Nutzen ergibt sich, wenn statt einem zwei Umlenkelemente eingesetzt werden. Dann wird auf der rotationssysmmetrischen Achse des rohrartigen Behälter ein Umlenkspiegel so angebracht, daß die Reflexion dieses Umlenkspiegels den Laserstrahl genau um 90° aus der Rotationsachse des Laserstrahls versetzt, der koaxial zur rotationssysmmetrischen Achse des rohrartigen Behälter einfällt. Im Zuge dieser versetzen Reflexion wird im Abstand des Radius des kleinsten zu erwartenden rohrartigen Behälters von dem ersten Umlenkelement ein zweites Umlenkelement angebracht, das die Aufgabe des ersten Umlenkelementes übernimmt. Hierdurch entsteht der Vorteil, daß mit dieser Anordnung unter wesentlich flacheren Winkeln bei kleinen Radien der rohrartigen Behälter gearbeitet werden kann und somit der Laserlichtpunkt nicht aufgrund eines steilen Einfallswinkels in ein Ellipsoid verzerrt wird wodurch das Energieprofil und die Verschweißung nachteilig beeinflußt würde.

Die Anordnung mit zwei Umlenkspiegeln wird asymmetrisch rotiert, wobei der erste Umlenkspiegel, analog der Ausgestaltung mit nur einem Umlenkelement, achssymmetrisch zum rohrartigen Behälter angeordnet ist und das zweite Umlenkelement auf einer rotationssymmetrischen Bahn läuft.

Da eine Rotation des Behälters nicht erforderlich ist und keine Teile aus dem Weg der Preßbacken der Preßvorrichtung entfernt werden müssen, bevor der Preßvorgang eingeleitet wird, und da bei dem erfindungsgemäßen Verfahren auch nicht mehrere Produktionsschritte zur Verschweißung erforderlich sind, ist die Produktionsgeschwindigkeit bei der Erfindung außerordentlich hoch.

In besonderen Fällen kann es zur Erzielung einer wirksamen bzw. schmuckmäßigen Schweißnaht nach einer Ausgestaltung der Erfindung vorteilhaft sein, eine weitere Antriebsvorrichtung vorzusehen. Diese erzeugt während der koaxialen Rotation des Umlenkspiegels eine um 90° versetzte, linear oszillierende Bewegung des Umlenkspiegels. Die erzeugte oszillierende Relativbewegung von rohrförmigem Behälter und Laserstrahl führt beispielsweise zu einer wellenförmigen Verschweißungsnaht. Vorzugsweise wird die Haltevorrichtung des rohrartigen Behälters in eine oszillierende Bewegung versetzt, so daß der Lichtpunkt des Laserstrahls auf der Umfangswand des rohrförmigen Behälters eine Wellenlinie erzeugt, wenn er gleichzeitig einer Rotation unterworfen ist.

Nach einer weiteren Ausgestaltung der Erfindung ist vorgesehen, daß eine Strahlformungsvorrichtung vorgesehen ist, die das Energieverteilungsprofil des Laserstrahls für die jeweilige Verschweißung optimiert. Dies entspricht im Regelfall einer in die Länge gezogenen, daher definiert, elliptisch ausgeformten Gauß'schen Kurve, d.h. dem transversalen, elektromagnetischen Mode 00 Profil eines Laserstrahls. Auf diese Weise wird ein weicher Übergang zwischen der Schmelzzone und der umgebenden, nicht umzuschmelzenden Zone erzeugt, wodurch eine spannungsarme und saubere Schweißnaht gewährleistet wird.

Für die Erzeugung eines wirksamen Laserstrahls sieht eine Ausgestaltung der Erfindung einen CO₂-Laser vor. Die Standardwellenlänge dieses Lasers liegt zwischen 9 und 12 µm. Bei diesem Wellenlängenbereich ist eine komplette Umschmelzung des Materials zu erwarten.

Wird ein Laser mit einer Wellenlänge von ca. 1 µm verwendet, ergibt sich eine Tiefenwirkung des Laserstrahls mittels derer zuerst das Material des rohrartigen Behälters im Inneren erwärmt wird und von da an, entsprechend den Temperaturkoeffizienten des Materials folgend, die Materialschichten von innen nach außen. Das heißt der Laserstrahl durchdringt die oberen Materialschichten, ohne diese anzuschmelzen und bewirkt erst in den inneren Materialschichten eine Schmelzwirkung. Dieses Verfahren kann bei bestimmten für den CO₂-Wellenlängenbereich durchlässigen verwendet werden.

Vorzuziehen ist allerdings im Regelfall bei den meisten Kunststoffen eine Wellenlänge von 10 µm, um eine sichere und vollständige Verschweißung zu erreichen, darüber hinaus ist diese Wellenlänge kostengünstig mit einem Kohlenstoffdioxid-Laser zu erreichen.

Je nach Material des tubenartigen Behälters tritt ein Teil der Laserstrahlung durch die Behälterwandung hindurch und trägt daher zur Erwärmung des Materials nicht bei.

Um den hindurchgetretenen Strahlungsanteil ebenfalls verfügbar zu machen, sieht eine Ausgestaltung der Erfindung vor, daß mit dem Umlenkelement ein Reflektor gekoppelt ist, der die hindurchgetretene Laserstrahlung zurück auf den Umfang des Nutzbereiches für die Verschweißung des Behälters reflektiert. Um zu verhindern, daß die reflektierte Strahlung unmittelbar zurück in den Laseresonator gelangen kann, und den Laserresonator beschädigen oder seinen Betrieb gefährden könnte, ist es vorteilhaft, den reflektierten Strahl auf eine Stelle zu richten, die gegenüber der ersten Auftreffstelle des Laserstrahls in Umfangsrichtung um einen gewissen Betrag versetzt liegt. Bei dieser Ausgestaltung der Erfindung ist es jedoch erforderlich, daß der äußere Reflexionsspiegel entfernt werden muß, bevor ein Verpressen in der Preßvorrichtung stattfindet. Es ist jedoch auch denkbar, den Halter für den rohrartigen Behälter zum Verpressen abzusenken bevor die Pressbacken zur Einwirkung gelangen. Eine weitere Möglichkeit besteht darin, die Heizvorrichtung in geringem Abstand zur Preßvorrichtung anzuordnen, um eine Relativbewegung zwischen äußerem Reflektor und tubenartigem Behälter zu vermeiden.

Die notwendige Rotationsgeschwindigkeit zur Erzielung einer möglichst optimalen, vollständigen Verschweißung hängt direkt von allen anderen Parametern der Vorrichtung ab, insbesondere von der Kunststoffart und der zur Verfügung stehenden Laserleistung. Die Werte hierfür lassen sich bisher nur experimentell ermitteln. Bei einer Laserquelle von etwa 100 Watt Ausgangsleistung, einer Verschweißungsnahtbreite von etwa 5 mm und einem Tubus aus Polyethylen mit 28 mm Durchmesser erbringt eine Rotation von etwa 450 Umdrehungen pro Minute eine ausreichende Qualität der Verschweißung. Die Rotationsgeschwindigkeit ist je nach Laserleistung, Nahtbreite, Wellenlänge, Tubenmaterial und Stahlprofil anzupassen.

Die Erfindung weist eine Reihe von Vorteilen auf. Die Vorrichtung ist apparativ relativ wenig aufwendig und benötigt vor allen Dingen sehr wenig Energieeinsatz. Der durchschnittliche elektrische Energiebedarf der Vorrichtung beträgt ca. 1 kW. Ferner wird das Füllgut im rohrförmigen Behälter nicht beeinträchtigt und spritzt bei dem Erwärmungsvorgang auch nicht heraus. Bei der Verwendung eines Umlenkspiegels, der den Laserstrahl gegen die Umfangswandung des rohrförmigen Behälters richtet, findet durch seine Rotation eine Selbstreinigung statt, sollte sich Material an der Spiegelfläche absetzen. Wie weithin bekannt, besteht auch die Möglichkeit, die Strahlvorrichtung durch eine für die eingesetzte Wellenlänge vollständig transmissive Schutzplatte zusätzlich abzuschließen. Schließlich ermöglicht die erfindungsgemäße Vorrichtung eine hohe Produktionsgeschwindigkeit.

Die Erfindung wird nachfolgend anhand von Zeichnungen erläutert.
- Fig. 1: zeigt schematisch eine Vorrichtung nach der Erfindung.
- Fig. 2: zeigt eine Einzelheit der Vorrichtung nach Fig. 1.
- Fig. 3: zeigt schematisch eine andere Ausführungsform einer Vorrichtung nach der Erfindung.
- Fig. 4: zeigt die Vorrichtung nach Fig. 3 in perspektivischer Ansicht.
- Fig. 5: zeigt schematisch eine weitere Ausführungsform der Vorrichtung nach der Erfindung.
- Fig. 6: zeigt perspektivisch die Vorrichtung nach Fig. 5.

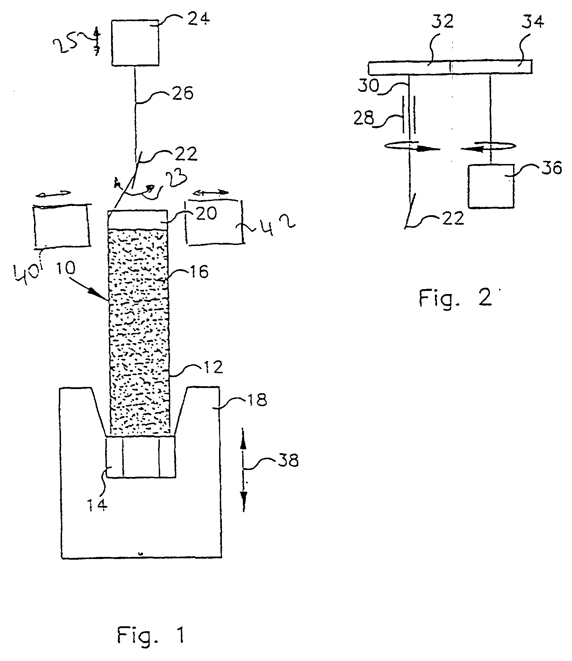

In Fig. 1 ist ein rohrartiger Behälter 10 zu erkennen, der aus einem rohrförmigen Mantel 12 besteht und einem Schraubverschluß 14 an einem Ende, mit dem der Behälter 10 verschlossen ist. Die Art des Verschlusses hat hier keine Bedeutung. Wesentlich ist, daß Füllgut 16 im rohrförmigen Behälter 10 nicht nach unten austreten kann.

Eine nicht näher dargestellte Haltevorrichtung 18 hält den Behälter 10 am Verschluß 14 in aufrechter Lage. Die Haltevorrichtung 18 kann z. B. linear bewegt werden, beispielsweise in Richtung der Zeichenebene. Es versteht sich, daß die Haltevorrichtung 18 eine Vielzahl von derartigen Behältern halten kann, um sie nacheinander in eine Position zu bringen, die in der Fig. 1 dargestellt ist. Die Befüllung des Behälters 10 mit dem Füllgut 16 erfolgt in einer separaten Station.

Das obere Ende des Behälters 10 bzw. des Mantels 12 ist offen, wie bei 20 angedeutet. Oberhalb des Behälters 10 ist ein Umlenkspiegel 22 angeordnet, über den eine Laserlichtquelle 24 ihren Strahl 26 auf die Innenwandung des Mantels 12 richtet. Der Spiegel 12 rotiert um die Längsachse des rohrförmigen Behälters 12, wobei der Reflexionspunkt des Spiegels 22 auf dieser Achse liegt. Dadurch wird ein ringförmiger Bereich der Innenwandung im Öffnungsbereich bestrahlt und bei entsprechender Energie des Laserstrahls 26 erwärmt. In Fig. 2 ist der Umlenkspiegel 22 angedeutet, wie er bei 28 um die Längsachse des Behälters 10 drehbar gelagert ist, wobei die Welle 30 ein Zahnrad 32 aufweist, das mit einem Zahnrad 34 kämmt, das von dem Antriebsmotor 36 angetrieben ist. Die Drehzahl des Spiegels 22 beträgt einige Umdrehungen pro Minute, kann jedoch viel höher sein, je nach Energie des Laserstrahls 26.

Der Spiegel 22 kann auch in seiner Winkelstellung verändert werden, wie durch Doppelpfeil 23 angedeutet. Hierdurch wird eine Anpassung an den Radius des Behälters 12 erhalten, denn die Höhe des Lichtpunktes an der Behälterwandung ändert sich entsprechend. Alternativ kann auch der Spiegel 22 in seiner Höhe verstellt werden. Dies ist durch Pfeil 25 in Fig. 1 angedeutet, wobei Laserquelle 24 und Spiegel 22 eine Einheit sind.

Während der Relativrotation von Laserstrahl 26 und Behälter 10 kann außerdem eine translatorische Bewegung stattfinden, z. B. in der Form, daß die Haltevorrichtung 18 in Längsrichtung des Behälters 10 oszillierend angetrieben wird, wie durch den Doppelpfeil 38 angedeutet. Die entsprechende Antriebsvorrichtung ist nicht dargestellt. Auf diese Weise wird ein wellenförmiger Bereich der Innenwandung des Behälters 10 bestrahlt.

Mit der beschriebenen Vorrichtung kann mithin ein Umfangbereich der Innenwandung erwärmt und angeschmolzen werden, so daß bei der sich an den Fertigungsgang anschließenden Verpressung in einer Preßvorrichtung mittels Backen 40, 42 das zuvor offene Ende 20 des Behälters 10 zusammengepreßt und verschweißt wird.

Die gezeigte Vorrichtung ist nicht beschränkt auf die Anwendung von Kunststoffmaterial für die rohrförmigen Behälter, vielmehr kann auch metallisches Material in Frage kommen.

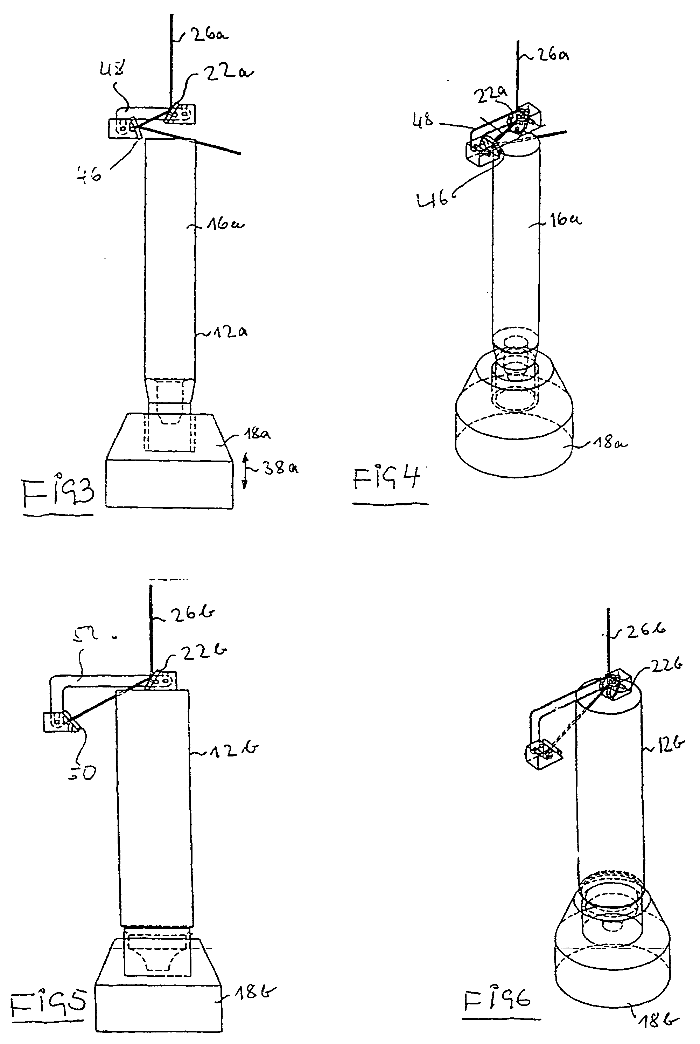

Bei der Ausführungsform nach den Fig. 3 und 4 sind Teile, die mit denen nach Fig. 1 und 2 gleich sind, mit gleichen Bezugszeichen versehen, denen ein "a" hinzugesetzt ist. Man erkennt, daß ein erster Umlenkspiegel 22a vorgesehen ist, dessen Rotationsachse mit der Längsachse des rohrförmigen Behälters 12a koaxial ist und in der Achse des Laserstrahls 26a liegt. Der Strahl wird vom Spiegel 22a auf einen weiteren Umlenkspiegel 46 abgelenkt, der knapp oberhalb des rohrförmigen Behälters 12a angeordnet ist in einem seitlichen bzw. radialen Abstand. Dieser Abstand entspricht einem Maß, das gleich ist dem kleinsten Radius eines zu verschweißenden Behälters 12a. Die Halterung des Spiegels 46 ist über einen Arm 48 mit der Halterung des Spiegels 22a verbunden. Dadurch rotiert der Spiegel 46 zusammen mit dem Spiegel 22a, so daß in gleicher Weise wie zu Fig. 1 beschrieben, ein linien- oder ringförmiger Bereich auf der Innenwandung des Behälters 12a bestrahlt wird. Diese Anordnung hat den Vorteil, daß die Auftreffrichtung des Laserstrahls auf die Behälterwandung viel steiler ist als dies für einen einzelnen Spiegel 22 gemäß Fig. 1 der Fall sein kann. Dadurch wird eine gleichmäßigere Energieverteilung bei höherer Strahlungsleistung erhalten.

Bei der Ausführungsform nach den Fig. 5 und 6 werden Teile, die mit denen nach Fig. 1 und 2 gleich sind, mit gleichen Bezugszeichen versehen, denen ein "b" hinzugefügt ist.

Die Anordnung des Umlenkspiegels 22b entspricht annähernd derjenigen nach den Fig. 1 bzw. 3 und 4, d. h. die Drehachse des Spiegels 22b liegt auf der gleichen Achse wie die des Behälters 12b und fällt zusammen mit der Achse des Laserstrahls 26b. Ein zweiter Umlenkspiegel 50 befindet sich außerhalb des Behälters 12b. Seine Halterung ist über einen Winkelarm 52 mit der Halterung für den Spiegel 12b verbunden, so daß beide Spiegel 22b, 50 gemeinsam rotieren. Der Spiegel 50 ist so angeordnet, daß er den durch die Wandung des Behälters 12b hindurchtretenden Strahl annähernd in die gleiche Richtung zurück reflektiert. Der Lichtpunkt des vom Spiegel 50 kommenden reflektierten Strahls liegt in gleicher Höhe wie der Lichtpunkt des vom Spiegel 22b kommenden Strahls, ist jedoch in Umfangsrichtung leicht versetzt, damit nicht eine Rückreflexion in den Resonator des Lasers erfolgt.

## Patentansprüche

1. Verfahren zum Verschweißen der Enden von rohrartigen, mit einem fließfähigen Medium gefüllten Behältern, insbesondere von Tuben, aus durch Wärme erweichbarem bzw. schmelzbarem dünnwandigem flachen Material, bei dem der rohrförmige Behälter so gehalten wird, daß das zu verschweißende Ende zugänglich ist, der rohrförmige Behälter am zugänglichen Ende über einen Umfangsbereich auf eine Temperatur erwärmt wird, daß er verschweißbar ist und das erwärmte Ende entlang einer länglichen quer zur Längserstreckung des Behälters verlaufenden Schweißnaht zusammengepreßt wird, **dadurch gekennzeichnet, daß** der rohrförmige Behälter (10) stationär gehalten wird, ein Laserstrahl über ein Umlenkelement (22) außerhalb des rohrförmigen Behälters (10) auf die Innenwand des rohrartigen Behälters (10) gerichtet wird und das Umlenkelement (22) in Drehung versetzt wird zur Erwärmung des Umfangsbereiches.

2. Verfahren nach Anspruch 1, **dadurch gekennzeichnet, daß** der Laserstrahl (26) über einen Umlenkspiegel (22) auf die Umfangswand gerichtet wird.

3. Verfahren nach Anspruch 1 oder 2, **dadurch gekennzeichnet, daß** der Umlenkspiegel (22) um die Achse des rohrförmigen Behälters (10) gedreht wird.

4. Verfahren nach Anspruch 3, **dadurch gekennzeichnet, daß** eine weitere Antriebsvorrichtung eine oszillierende Relativbewegung (38) von rohrförmigem Behälter (10) und Laserstrahl (26) während der Rotation erzeugt.

5. Verfahren nach einem der Ansprüche 1 bis 4, **dadurch gekennzeichnet, daß** ein CO₂-Laser verwendet wird.

6. Verfahren nach einem der Ansprüche 1 bis 5, **dadurch gekennzeichnet, daß** die Wellenlänge des Lasers zwischen 0,3 und 20 µm liegt.

7. Verfahren nach einem der Ansprüche 1 bis 6, **dadurch gekennzeichnet, daß** die Drehzahl der Rotation mindestens eine Umdrehung pro Minute beträgt.

8. Vorrichtung zum Verschweißen von rohrartigen, mit einem fließfähigen Medium gefüllten Behältern, insbesondere Tuben, aus durch Wärme erweichbarem bzw. schmelzbarem dünnwandigen Material, mit einer Haltevorrichtung, in welcher der rohrförmige Behälter so gehalten ist, daß das zu verschweißende nach oben zeigende Ende zugänglich ist, einem oberhalb des Behälters drehbar gelagerten Umlenkelement, das von einer Drehantriebsvorrichtung in Drehung gesetzt wird, einem Laser, dessen Strahl auf das Umlenkelement gerichtet ist derart, daß der von dem Umlenkelement kommende Laserstrahl auf die Innenseite des Behälters nahe dem oberen Ende gerichtet wird und einen Umfangsbereich des Behälters erwärmt, und einer Preßvorrichtung, die das obere Ende des Behälters zusammenpreßt zur Bildung einer quer zur Achse des Behälters verlaufenden Schweißnaht.

9. Vorrichtung nach Anspruch 8, **dadurch gekennzeichnet, daß** das Umlenkelement zwecks Anpassung an den Durchmesser des rohrförmigen Behälters so verstellbar ist, daß eine Veränderung des Auslenkwinkels erzeugt wird.

10. Vorrichtung nach Anspruch 8 oder 9, **dadurch gekennzeichnet, daß** mit dem Umlenkelement ein Reflektor gekoppelt ist, der auf der Außenseite des rohrförmigen Behälters angeordnet ist für die Reflexion der durch die Behälterwandung hindurchtretenden Strahlung zurück auf den bestrahlten Umfangsbereich.

11. Vorrichtung nach Anspruch 10, **dadurch gekennzeichnet, daß** der Reflektor so angeordnet ist, daß die reflektierte Strahlung an einer Stelle am Behälter auftrifft, die in Umfangsrichtung gesehen gegenüber der Auftreffstelle der vom Umlenkelement kommenden Strahlung versetzt liegt.

12. Vorrichtung nach Anspruch 8, **dadurch gekennzeichnet, daß** ein erster Umlenkspiegel in der Achse des Laserstrahls und ein zweiter Umlenkspiegel darunter, jedoch radial versetzt dazu, angeordnet ist, von dem der Laserstrahl auf die Innenwandung des rohrförmigen Behälters gerichtet wird, wobei die beiden Umlenkspiegel um die Längsachse des rohrförmigen Behälters in Rotation versetzt sind.

13. Vorrichtung nach Anspruch 12, **dadurch gekennzeichnet, daß** der Abstand des zweiten Umlenkspiegels von der Achse des Laserstrahls etwa gleich dem Radius des kleinsten rohrförmigen Behälters ist.

## Claims

1. Method for welding the ends of tubular containers, in particular tubes, made from a flat material having thin walls and which can be softened through heat or be molten, the tubular containers being filled with a flowable medium, wherein the tubular container is held such that the end to be welded is accessible, the tubular container is heated at the accessible end at a peripheral region to a temperature at which is can be welded and the heated end is compressed along a longitudinal welding seam which extends transversely to the longitudinal extension of the container, **characterized in that** the tubular container (10) is stationary, a laser beam is directed onto the inner wall of the tubular container (10) via a deflection element (22) disposed outside of the tubular container (10) and the deflection element (22) is rotated to heat the peripheral region.

2. Method according to claim 1, **characterized in that** the laser beam (26) is directed onto the peripheral wall via a deflection mirror (22).

3. Method according to claim 1 or 2, **characterized in that** the deflection mirror (22) is rotated about the axis of the tubular container (10).

4. Method according to claim 3, **characterized in that**, during rotation, a further drive device generates an oscillating relative motion (38) between the tubular container (10) and laser beam (26).

5. Method according to any one of the claims 1 through 4, **characterized in that** a CO₂ laser is used.

6. Method according to any one of the claims 1 through 5, **characterized in that** the wavelength of the laser is between 0.3 and 20µm.

7. Method according to any one of the claims 1 through 6, **characterized in that** the rotational speed is at least one rotation per minute.

8. Device for welding tubular containers, in particular tubes, made from a flat material with thin walls which can be softened through heat or be molten, the tubes being filled with a flowable medium, the device comprising a holding device in which the tubular container is held such that the upwardly facing end to be welded is accessible, a deflection element which is rotatably disposed above the container and is rotated by a rotational drive device, a laser whose beam is directed onto the deflection element such that the laser beam is directed from the deflection element onto the inner side of the container close to the upper end to heat a peripheral region of the container, and with a pressing device which compresses the upper end of the container to form a welding seam which extends transversely to the axis of the container.

9. Device according to claim 8, **characterized in that** the deflection element can be adjusted to the diameter of the tubular container such that the deflection angle is changed.

10. Device according to claim 8 or 9, **characterized in that** a reflector is coupled to the deflection element, which is disposed on the outer side of the tubular container for reflecting radiation, which penetrates through the container wall, back onto the irradiated peripheral region.

11. Device according to claim 10, **characterized in that** the reflector is disposed such that the reflected radiation impinges at a point on the container which, viewed in the peripheral direction, is offset from the point of impingement of the radiation from the deflection element.

12. Device according to claim 8, **characterized in that** a first deflection mirror is disposed on the axis of the laser beam and a second deflection mirror is disposed therebelow, however, radially offset thereto, the laser beam being directed from the second deflection mirror onto the inner wall of the tubular container, wherein the two deflection mirrors are rotated about the longitudinal axis of the tubular container.

13. Device according to claim 12, **characterized in that** the separation between the second deflection mirror and the axis of the laser beam is approximately equal to the radius of the smallest tubular container.

## Revendications

1. Procédé de soudage des extrémités de contenants tubulaires remplis d'un produit capable de fluer, en particulier de tubes, consistant en un matériau plat à parois minces pouvant être ramolli ou fondu par la chaleur, selon lequel le contenant tubulaire est maintenu de façon telle que l'extrémité à souder est accessible, selon lequel le contenant tubulaire est chauffé à l'extrémité accessible sur une zone périphérique à une température permettant de souder et selon lequel l'extrémité chauffée est réunie par pressage le long d'un cordon de soudure oblong s'étendant transversalement à la longueur du contenant, **caractérisé en ce que** le contenant tubulaire (10) est maintenu fixe, **en ce qu'**un rayon laser est dirigé sur la paroi interne du contenant tubulaire (10) au moyen d'un élément de déviation (22) en-dehors du contenant tubulaire (10) et **en ce que** l'élément de déviation (22) est mis en rotation pour chauffer la zone périphérique.

2. Procédé selon la revendication 1, **caractérisé en ce que** le rayon laser (26) est dirigé sur la paroi périphérique par l'intermédiaire d'un miroir de déviation (22).

3. Procédé selon la revendication 1 ou 2, **caractérisé en ce que** le miroir de déviation (22) est mis en rotation autour de l'axe du contenant tubulaire (10).

4. Procédé selon la revendication 3, **caractérisé en ce qu'**un dispositif d'actionnement supplémentaire produit un mouvement relatif oscillant (38) du contenant tubulaire (10) et du rayon laser (26) durant la rotation.

5. Procédé selon l'une quelconque des revendications 1 à 4, **caractérisé en ce que** l'on utilise un laser à CO₂.

6. Procédé selon l'une quelconque des revendications 1 à 5, **caractérisé en ce que** la longueur d'onde du laser se situe entre 0,3 et 20 µm.

7. Procédé selon l'une quelconque des revendications 1 à 6, **caractérisé en ce que** la vitesse de rotation est d'au moins une rotation par minute.

8. Dispositif de soudage des extrémités de contenants tubulaires remplis d'un produit capable de fluer, en particulier de tubes, consistant en un matériau plat à parois minces pouvant être ramolli ou fondu par la chaleur, comprenant un dispositif de maintien dans lequel le contenant tubulaire est maintenu de façon telle que l'extrémité à souder dirigée vers le haut soit accessible, un élément de déviation monté rotatif en amont du contenant, mis en rotation par un dispositif de commande de rotation, un laser, dont le rayon est dirigé sur l'élément de déviation de telle façon que le rayon laser venant de l'élément de déviation soit dirigé sur la face interne du contenant près de l'extrémité supérieure et chauffe une zone périphérique du contenant, et un dispositif de pressage compressant l'extrémité supérieure du contenant pour former un cordon de soudure s'étendant transversalement à l'axe du contenant.

9. Dispositif selon la revendication 8, **caractérisé en ce que** pour adapter l'élément de déviation au diamètre du contenant tubulaire, on peut le régler de telle façon que l'on génère une modification de l'angle de déviation.

10. Dispositif selon la revendication 8 ou 9, **caractérisé en ce qu'**un réflecteur, disposé sur la face extérieure du contenant tubulaire, est couplé à l'élément de déviation pour réfléchir à nouveau le rayonnement pénétrant à travers la paroi du contenant vers la zone périphérique soumise au rayonnement.

11. Dispositif selon la revendication 10, **caractérisé en ce que** le réflecteur est disposé de telle façon que le rayonnement réfléchi apparaît en un endroit du contenant qui, vu en direction périphérique, est décalé par rapport à la zone d'impact du rayonnement venant de l'élément de déviation.

12. Dispositif selon la revendication 8, **caractérisé en ce qu'**un premier miroir de déviation est disposé dans l'axe du rayon laser et **en ce qu'**un deuxième est disposé en-dessous, mais décalé radialement, à partir duquel le rayon laser est dirigé sur la face intérieure du contenant tubulaire, les deux miroirs de déviation étant décalés autour de l'axe longitudinal du contenant tubulaire.

13. Dispositif selon la revendication 12, **caractérisé en ce que** la distance du deuxième miroir de déviation par rapport à l'axe du rayon laser est sensiblement égale au rayon du plus petit contenant tubulaire.
